# EUROPÄISCHE PATENTSCHRIFT

(11) **EP 0 942 860 B1**
(45) Veröffentlichungstag und Bekanntmachung des Hinweises auf die Patenterteilung: **05.06.2002**
(21) Anmeldenummer: 97954366.7
(22) Anmeldetag: 09.12.1997
(51) Int. Cl.: B60S 1/52

(54) **ZUR BEFESTIGUNG IN EINEM KRAFTFAHRZEUG VORGESEHENER DÜSENSTOCK**
A NOZZLE HOLDER TO BE FIXED TO A MOTOR VEHICLE
PORTE-GICLEUR SE FIXANT DANS UN VEHICULE AUTOMOBILE

(30) Priorität: 14.12.1996 DE 19652083
(43) Veröffentlichungstag der Anmeldung: 22.09.1999
(73) Patentinhaber: Siemens Aktiengesellschaft, 80333 München (DE)
(72) Erfinder: STANGE, Rüdiger, D-36214 Nentershausen (DE); SCHLEIN, Rolf-Dieter, D-36199 Rotenburg (DE)
(86) Internationale Anmeldenummer: EP9706861
(87) Internationale Veröffentlichungsnummer: WO9826964

(56) Entgegenhaltungen:
- DE-A- 3 906 657
- DE-A- 3 925 800
- DE-A- 4 305 245

## Beschreibung

Die Erfindung betrifft einen zur Befestigung in einem Kraftfahrzeug vorgesehenen Düsenstock mit einer Waschdüse für eine Scheibenwaschanlage.

In einem solchen Düsenstock befestigte Waschdüsen werden in heutigen Kraftfahrzeugen vielfach zur Reinigung von Scheiben oder Scheinwerfergläsern eingesetzt und sind damit bekannt. Der Düsenstock hat beispielsweise auf seiner der Waschdüse abgewandten Seite mehrere an Federarmen angeordnete Rastelemente, die den Rand einer Ausnehmung eines an die zu reinigende Scheibe angrenzenden Karosserieteils hintergreifen. Der Düsenstock kann hierdurch einfach in die Ausnehmung hineingedrückt werden, bis er von den Rastelementen sicher gehalten ist.

Nachteilig bei der bekannten Vorrichtung ist, daß die Ausnehmung und das Karosserieblech Toleranzen aufweisen, die eine exakte Ausrichtung der Waschdüse gegenüber der zu reinigenden Scheibe unmöglich machen. Auch nach einer Verformung des den Düsenstock halternden Karosserieteils, beispielsweise durch einen Unfall des Kraftfahrzeuges, ist eine vorgesehene Ausrichtung der Waschdüse gegenüber der Scheibe nicht mehr gewährleistet. Dies ist insbesondere bei Scheibenreinigungsanlagen, bei denen die Waschdüsen die Scheibe durch einfaches Aufsprühen von Waschflüssigkeit ohne ein Nachwischen mit einem Scheibenwischer nicht hinnehmbar, da hierbei eine genaue Ausrichtung der Waschdüse für eine gründliche Reinigung der Scheibe besonders wichtig ist.

Aus der nachveröffentlichten EP-A-0 835 793 (Figur 5d) ist ebenfalls ein Düsenstock bekannt, der mit einem Federelement in einer Ausnehmung des Karosseriebleches befestigt ist, wobei das Federelement an der Unterseite des Düsenstocks angeordnet ist. Seitlich von dem Federelement ist in einem Abstand ein Exzenter zur Ausrichtung des Düsenstocks angeordnet.

EP-A-0 835 793 stellt einen Stand der Technik im Sinne vom Art. 54(3) und (4) EPÜ dar, wobei diese Druckschrift laut Art 56 EPÜ für die Frage der erfinderischen Tätigkeit nicht von Bedeutung ist.

Der Erfindung liegt das Problem zugrunde, einen Düsenstock der eingangs genannten Art so zu gestalten, daß die Toleranzen der an die zu reinigende Scheibe angrenzenden Karosserieteile keine fehlerhafte Ausrichtung der Waschdüse hervorheben.

Dieses Problem wird erfindungsgemäß durch einen verstellbaren Anschlag, bestehend aus einem Exzenter, gelöst, dem ein Federelement gegenüberliegend angeordnet ist. Dadurch läßt sich der Neigungswinkel besonders feinstufig einstellen. Ein weiterer Vorteil besteht darin, daß der Neigungswinkel des Düsenstocks durch eine Selbsthemmung des Exzenters zuverlässig in seiner eingestellten Position gehalten wird.

Durch diese Gestaltung wird der erfindungsgemäße Düsenstock zunächst in dem Kraftfahrzeug befestigt. Anschließend läßt sich die Waschdüse in ihre gegenüber der zu reinigenden Scheibe vorgesehene Position ausrichten. Hierdurch werden Toleranzen des Düsenstocks oder des den Düsenstocks halternden Karosserieblechs durch eine einfache Verstellung des Neigungswinkels der Waschdüse ausgeglichen.

Die Mittel zur Verstellung des Neigungswinkels der Waschdüse könnten beispielsweise ein Gelenk aufweisen, mit dem die Waschdüse in dem Düsenstock in ihrer Neigung verstellbar ist. Die Mittel zur Verstellung des Neigungswinkels der Waschdüse gestalten sich jedoch konstruktiv besonders einfach, weil der Düsenstock in oder entgegen der Sprührichtung der Waschdüse schwenkbar gelagert ist und an seiner der schwenkbaren Lagerung gegenüberliegenden Seite einen verstellbaren Anschlag aufweist. Hierdurch kann der Düsenstock und damit die Waschdüse durch eine Verstellung des Anschlags verschwenkt werden.

Der bauliche Aufwand des Düsenstocks wird zudem besonders gering gehalten, da der Düsenstock mit einem Federelement gegen den verstellbaren Anschlag vorgespannt ist. Weiterhin liegt der Düsenstock durch diese Gestaltung mit seinem Anschlag zuverlässig an dem Karosserieteil an.

Ein Düsenstock, welcher zur Befestigung in einer Ausnehmung eines Karosserieblechs des Kraftfahrzeuges vorgesehen ist, ist gemäß einer anderen vorteilhaften Weiterbildung der Erfindung besonders kostengünstig herstellbar, wenn die schwenkbare Lagerung einen Rand der Ausnehmung gabelförmig umgreifend gestaltet ist und wenn das Federelement einen am Rand der Ausnehmung anliegenden, den Düsenstock gegen die schwenkbare Lagerung vorspannenden Vorsprung aufweist. Weiterhin hat diese Gestaltung den Vorteil, daß Toleranzen des Düsenstock oder der Ausnehmung nicht zu einem losen Sitz oder einer erschwerten Montage des Düsenstocks in der Ausnehmung führen können.

Der Düsenstock ist gemäß einer anderen vorteilhaften Weiterbildung der Erfindung besonders kostengünstig herstellbar, wenn er einteilig mit dem Federelement und einer Halterung für den verstellbaren Anschlag gefertigt ist.

Ein seitliches Kippen des Düsenstocks in der Ausnehmung läßt sich gemäß einer anderen vorteilhaften Weiterbildung der Erfindung zuverlässig vermeiden, wenn der verstellbare Anschlag zwei mit Abstand zueinander angeordnete Exzenter aufweist.

Die Lagerung der Exzenter gestaltet sich gemäß einer anderen vorteilhaften Weiterbildung der Erfindung konstruktiv besonders einfach, wenn die beiden Exzenter mittels einer drehbar in dem Düsenstock gelagerten Welle miteinander verbunden sind.

Die Exzenter lassen sich gemäß einer anderen vorteilhaften Weiterbildung der Erfindung einfach an dem Düsenstock befestigen, wenn der Düsenstock zumindest eine die Welle des Exzenters teilweise umgreifende Lagerschale hat.

Häufig sind die Karosseriebleche gegenüber der zu reinigenden Scheibe seitlich geneigt angeordnet. Dies führt insbesondere bei einer Fluidic-Düse mit einem streifenförmigen Sprühbereich als Waschdüse zu einem geneigten Sprühbereich auf der Scheibe. Eine vorgesehene Neigung des Sprühbereichs auf der Scheibe läßt sich gemäß einer anderen vorteilhaften Weiterbildung der Erfindung besonders einfach einstellen, wenn die Exzenter an dem Düsenstock einzeln gelagert sind. Hierdurch lassen sich die Exzenter unabhängig voneinander verstellen, so daß neben dem Neigungswinkel auch der Verdrehwinkel der Waschdüse eingestellt werden kann.

Der Düsenstock ist gemäß einer anderen vorteilhaften Weiterbildung der Erfindung dauerhaft in seiner eingestellten Position gehalten, wenn die Lagerung der Exzenter einen Preßsitz aufweist. Hierdurch lassen sich die Exzenter nur mit einem relativ hohen Kraftaufwand verstellen.

Eine Grundstellung des Neigungswinkels des Düsenstocks läßt sich gemäß einer anderen vorteilhaften Weiterbildung der Erfindung einfach einstellen, wenn die Exzenter oder die Welle eine Raststelle aufweisen. Dies ist insbesondere bei einer Serienproduktion der erfindungsgemäßen Vorrichtung von Vorteil, da durch diese Gestaltung der Düsenstock bei seiner Montage in eine von der Raststelle bestimmte Position besonders schnell eingestellt werden kann. Erst bei Überschreiten einer Toleranzgrenze oder bei ungünstiger Addition der Toleranzen der Bauteile wird der Neigungswinkel der Waschdüse nachgestellt.

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in
- Figur 1: einen in einer Ausnehmung eines Karosserieblechs befestigten Düsenstocks
- Figur 2: den Düsenstock aus Figur 1 von einer Düse aus gesehen,
- Figur 3: eine Schnittdarstellung durch den Düsenstock aus Figur 2 entlang der Linie III - III.

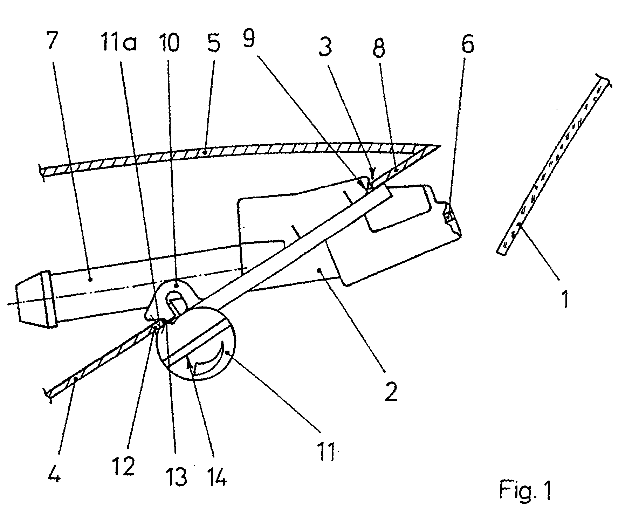

Die Figur 1 zeigt einen vor einer zu reinigenden Scheibe 1 eines Kraftfahrzeuges angeordneten Düsenstock 2. Der Düsenstock 2 ist in einer Ausnehmung 3 eines Karosserieblechs 4 unterhalb eines Außenblechs 5 des Kraftfahrzeuges befestigt. Der Düsenstock 2 trägt an seiner der Scheibe 1 zugewandten Seite eine Waschdüse 6, die beispielsweise als Fluidic-Düse ausgebildet sein kann. Auf der der Waschdüse 6 abgewandten Seite hat der Düsenstock 2 einen Anschlußstutzen für eine nicht dargestellte Waschflüssigkeitsleitung.

Der Düsenstock 2 ist an einem Ende gabelförmig, den Rand 8 der Ausnehmung 3 des Karosserieblechs 4 umgreifend gestaltet. Hierdurch hat der Düsenstock 2 an dieser Stelle eine schwenkbare Lagerung 9. Auf der der schwenkbaren Lagerung 9 gegenüberliegenden Seite hat der Düsenstock 2 ein Federelement 10 und einen von einem Exzenter 11 verstellbaren Anschlag 11a. Zwischen dem Federelement 10 und dem Exzenter 11 ist ein Rand 12 der Ausnehmung 3 eingespannt. Weiterhin hat das Federelement 10 einen Vorsprung 13, der den Düsenstock 2 gegen die Lagerung 9 vorspannt. Der Exzenter 11 hat einen Schlitz 14 zum Ansetzen eines nicht dargestellten Schraubendrehers. Bei einer Verdrehung des Exzenters 11 wird der Düsenstock 2 verschwenkt und damit der Neigungswinkel der Waschdüse 6 gegenüber der Scheibe 1 verstellt. Der Exzenter 11 ist durch seine geringe Steigung selbsthemmend gestaltet, so daß dessen selbständige Verstellung verhindert wird.

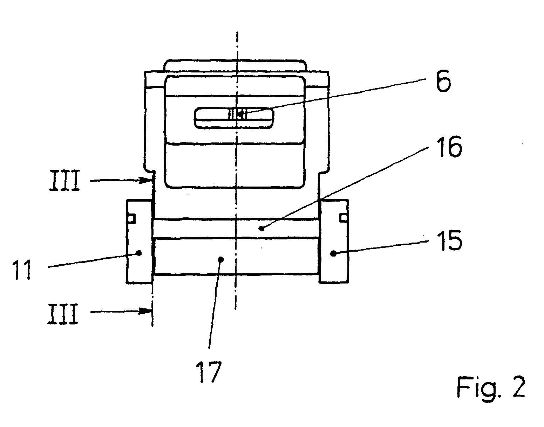

Die Figur 2 zeigt in einer Seitenansicht des Düsenstocks 2 aus Figur 1, daß zwei beidseitig des Düsenstocks 2 angeordnete Exzenter 11, 15 zur Einstellung des Neigungswinkels der Waschdüse 6 vorgesehen sind. Die Exzenter 11, 15 sind über eine Welle 16 miteinander verbunden und lassen sich hierdurch gleichzeitig verdrehen. Die Welle 16 ist in einer teilweise geöffneten Lagerschale 17 drehbar gehalten.

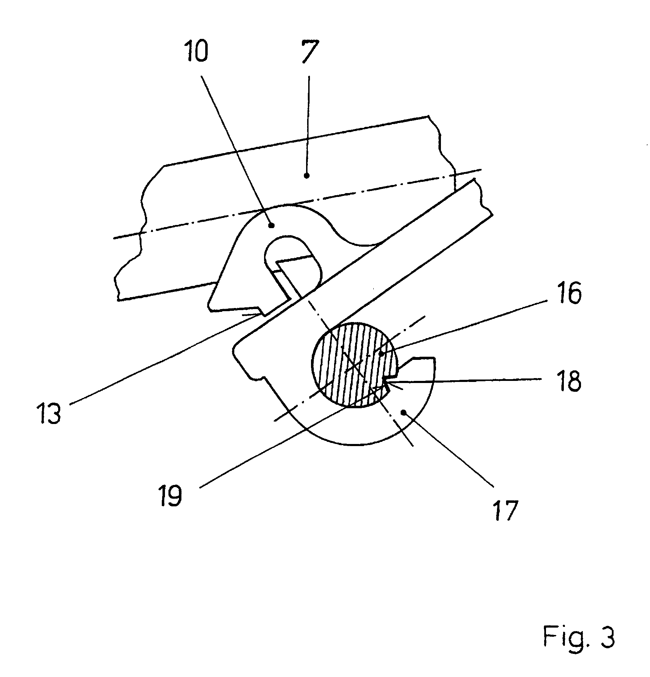

Die Figur 3 zeigt in einer vergrößerten Schnittdarstellung entlang der Linie III - III aus Figur 2 die Gestaltung der Lagerschale 17. Die Lagerschale 17 umgreift die Welle 16 um ungefähr 270°. Hierdurch läßt sich die Welle 16 einfach durch den offenen Bereich in die Lagerschale 17 eindrücken und ist anschließend in dieser formschlüssig gehalten. Die Lagerschale 17 hat zur Markierung einer Grundstellung der Exzenter 11, 15 an ihrer Innenseite einen Vorsprung 18, der in der eingezeichneten Stellung in eine Nut 19 der Welle 16 eingreift.

## Patentansprüche

1. Zur Befestigung in einem Kraftfahrzeug vorgesehener Düsenstock mit einer Waschdüse für eine Scheibenwaschanlage, mit Mittel zur Verstellung des Neigungswinkels der Waschdüse, indem der Düsenstock in oder entgegen der Sprührichtung der Waschdüse schwenkbar gelagert ist und an seiner der schwenkbaren Lagerung gegenüberliegenden Seite einen verstellbaren Anschlag aufweist, und daß der verstellbare Anschlag (11a) einen Exzenter (11, 15) aufweist, dem ein Federelement (10) gegenüberliegend angeordnet ist.

2. Düsenstock nach Anspruch 1, **dadurch gekennzeichnet, daß** der Düsenstock (2) mit einem Federelement (10) gegen den verstellbaren Anschlag (11a) vorgespannt ist.

3. Düsenstock, welcher zur Befestigung in einer Ausnehmung eines Karosserieblechs des Kraftfahrzeuges vorgesehen ist nach zumindest einem der vorhergehenden Ansprüche, **dadurch gekennzeichnet, daß** die schwenkbare Lagerung (9) einen Rand (8) der Ausnehmung (3) gabelförmig umgreifend gestaltet ist, und daß das Federelement (10) einen am Rand (12) der Ausnehmung (3) anliegenden, den Düsenstock (2) gegen die schwenkbare Lagerung (9) vorspannenden Vorsprung aufweist.

4. Düsenstock nach zumindest einem der vorhergehenden Ansprüche, **dadurch gekennzeichnet, daß** der Düsenstock (2) einteilig mit dem Federelement (10) und einer Halterung (Lagerschale 17) für den verstellbaren Anschlag (11a) gefertigt ist.

5. Düsenstock nach zumindest einem der vorhergehenden Ansprüche, **dadurch gekennzeichnet, daß** der verstellbare Anschlag (11a) zwei mit Abstand zueinander angeordnete Exzenter (11, 15) aufweist.

6. Düsenstock nach zumindest einem der vorhergehenden Ansprüche, **dadurch gekennzeichnet, daß** die beiden Exzenter (11, 15) mittels einer drehbar in dem Düsenstock (2) gelagerten Welle (16) miteinander verbunden sind.

7. Düsenstock nach zumindest einem der vorhergehenden Ansprüche, **dadurch gekennzeichnet, daß** der Düsenstock (2) zumindest eine die Welle (16) des Exzenters (11, 15) teilweise umgreifende Lagerschale (17) hat.

8. Düsenstock nach zumindest einem der vorhergehenden Ansprüche, **dadurch gekennzeichnet, daß** die Exzenter (11, 15) an dem Düsenstock (2) einzeln gelagert sind.

9. Düsenstock nach zumindest einem der vorhergehenden Ansprüche, **dadurch gekennzeichnet, daß** die Lagerung der Exzenter (11, 15) einen Preßsitz aufweist.

10. Düsenstock nach zumindest einem der vorhergehenden Ansprüche, **dadurch gekennzeichnet, daß** die Exzenter oder die Welle (16) eine Raststelle (Vorsprung 18) aufweisen.

## Claims

1. Nozzle assembly provided for fastening in a motor vehicle and having a washing nozzle for a windscreen washing system, with means for adjusting the angle of inclination of the washing nozzle, in that the nozzle assembly is mounted pivotably in or opposite to the spraying direction of the washing nozzle and has an adjustable stop on its side located opposite the pivotable mounting, **characterized in that** the adjustable stop (11a) has an eccentric (11, 15) opposite which a spring element (10) is arranged.

2. Nozzle assembly according to Claim 1, **characterized in that** the nozzle assembly (2) is prestressed against the adjustable stop (11a) by means of a spring element (10).

3. Nozzle assembly, which is provided for fastening in a recess of a body panel of the motor vehicle, according to at least one of the preceding claims, **characterized in that** the pivotable mounting (9) is designed to engage in a forklike manner round one edge (8) of the recess (3), and **in that** the spring element (10) has a projection bearing on the edge (12) of the recess (3) and prestressing the nozzle assembly (2) against the pivotable mounting (9).

4. Nozzle assembly according to at least one of the preceding claims, **characterized in that** the nozzle assembly (2) is manufactured in one piece with the spring element (10) and with a mounting (bearing shell 17) for the adjustable stop (11a).

5. Nozzle assembly according to at least one of the preceding claims, **characterized in that** the adjustable stop (11a) has two eccentrics (11, 15) arranged at a distance from one another.

6. Nozzle assembly according to at least one of the preceding claims, **characterized in that** the two eccentrics (11, 15) are connected to one another by means of a shaft (16) rotatably mounted in the nozzle assembly (2).

7. Nozzle assembly according to at least one of the preceding claims, **characterized in that** the nozzle assembly (2) has at least one bearing shell (17) partially surrounding the shaft (16) of the eccentric (11, 15).

8. Nozzle assembly according to at least one of the preceding claims, **characterized in that** the eccentrics (11, 15) are individually mounted on the nozzle assembly (2).

9. Nozzle assembly according to at least one of the preceding claims, **characterized in that** the mounting of the eccentrics (11, 15) has a press fit.

10. Nozzle assembly according to at least one of the preceding claims, **characterized in that** the eccentrics or the shaft (16) have a catching point (projection 18).

## Revendications

1. Porte-gicleur prévu pour la fixation dans un véhicule à moteur, pourvu d'un gicleur de lavage pour une installation de lavage de vitre, avec un moyen de réglage de l'angle d'inclinaison du gicleur de lavage, dans lequel le porte-gicleur est appuyé de manière orientable dans ou à l'opposé de la direction de pulvérisation du gicleur de lavage et comporte de son côté opposé à l'appui orientable une butée réglable, la butée réglable (11a) comportant un excentrique (11, 15) à l'opposé duquel est placé un élément élastique (10).

2. Porte-gicleur selon la revendication 1, **caractérisé en ce que** le porte-gicleur (2) est sollicité par un élément élastique (10) contre la butée réglable (11a).

3. Porte-gicleur, qui est prévu pour la fixation dans une ouverture d'une tôle de carrosserie du véhicule à moteur selon l'une au moins des revendications précédentes, **caractérisé en ce que** l'appui orientable (9) est conçu de façon à chevaucher à la façon d'une fourche un bord (8) de l'ouverture (3), et **en ce que** l'élément élastique (10) comporte une partie en saillie s'appuyant sur le bord (12) de l'ouverture (3), sollicitant le porte-gicleur (2) contre l'appui orientable (9).

4. Porte-gicleur selon l'une au moins des revendications précédentes, **caractérisé en ce que** le porte-gicleur (2) est fabriqué d'une seule pièce avec l'élément élastique (10) et un support (coquille de coussinet 17) pour la butée réglable (11a).

5. Porte-gicleur selon l'une au moins des revendications précédentes, **caractérisé en ce que** la butée réglable (11a) comporte deux excentriques (11, 15) placés à distance l'un de l'autre.

6. Porte-gicleur selon l'une au moins des revendications précédentes, **caractérisé en ce que** les deux excentriques (11, 15) sont reliés l'un à l'autre au moyen d'une broche (16) logée en pouvant tourner dans le porte-gicleur (2).

7. Porte-gicleur selon l'une au moins des revendications précédentes, **caractérisé en ce que** le porte-gicleur (2) a au moins une coquille de coussinet (17) entourant partiellement la broche (16) de l'excentrique (11, 15).

8. Porte-gicleur selon l'une au moins des revendications précédentes, **caractérisé en ce que** les excentriques (11, 15) sont placés séparément sur le porte-gicleur (2).

9. Porte-gicleur selon l'une au moins des revendications précédentes, **caractérisé en ce que** le logement des excentriques (11, 15) comporte un ajustage serré.

10. Porte-gicleur selon l'une au moins des revendications précédentes, **caractérisé en ce que** les excentriques ou la broche (16) comportent une position d'encliquetage (saillie 18).
